(19) Europäisches Patentamt
European Patent Office
Office européen des brevets

(11) **EP 3 545 657 B1**

(12) **EUROPEAN PATENT SPECIFICATION**

(45) Date of publication and mention
of the grant of the patent:
**13.04.2022 Bulletin 2022/15**

(21) Application number: **16819075.9**

(22) Date of filing: **20.12.2016**

(51) International Patent Classification (IPC):
***H04L 25/03*** (2006.01)

(52) Cooperative Patent Classification (CPC):
**H04L 25/03318; H04L 25/03229; H04L 25/03235**

(86) International application number:
**PCT/EP2016/081988**

(87) International publication number:
**WO 2018/113931 (28.06.2018 Gazette 2018/26)**

(54) **SYSTEMS AND METHODS FOR DECODING OF MODULATED SYMBOLS OR COMPENSATING CHANNEL FREQUENCY RESPONSE OF THE MODULATED SYMBOLS**

SYSTEME UND VERFAHREN ZUR DECODIERUNG VON MODULIERTEN SYMBOLEN ODER KOMPENSATION DES KANALFREQUENZGANGS DER MODULIERTEN SYMBOLEN

SYSTÈMES ET PROCÉDÉS DE DÉCODAGE DE SYMBOLES MODULÉS OU DE COMPENSATION DE RÉPONSE EN FRÉQUENCE DE CANAL DES SYMBOLES MODULÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.10.2019 Bulletin 2019/40**

(73) Proprietor: **Huawei Technologies Co., Ltd.**
**Longgang District**
**Shenzhen, Guangdong 518129 (CN)**

(72) Inventors:
• **ZARUBINSKY, Michael**
**80992 Munich (DE)**
• **GIDRON, Dori**
**80992 Munich (DE)**
• **XIAO, Zhiyu**
**80992 Munich (DE)**
• **XIE, Changsong**
**80992 Munich (DE)**
• **LEVY, Dudi**
**80992 Munich (DE)**

(74) Representative: **Gill Jennings & Every LLP**
**The Broadgate Tower**
**20 Primrose Street**
**London EC2A 2ES (GB)**

(56) References cited:
• **RÉMI SFEZ ET AL: "A weighted-output variant of the viterbi algorithm for concatenated schemes using a convolutional inner code Une Variante À Sortie Pondérée De L'Algorithme De Viterbi Pour Des Schémas Concaténés À Code Intérieur Convolutif", 5 November 1990 (1990-11-05), EUROCODE '90, SPRINGER BERLIN HEIDELBERG, BERLIN, HEIDELBERG, PAGE(S) 259 - 270, XP019188928, ISBN: 978-3-540-54303-9 section 4**
• **SESHADRI N ET AL: "On post-decision symbol-reliability generation", PROCEEDINGS OF THE INTERNATIONAL CONFERENCE ON COMMUNICATIONS (ICC). GENEVA, MAY 23 - 26, 1993; [PROCEEDINGS OF THE INTERNATIONAL CONFERENCE ON COMMUNICATIONS (ICC)], NEW YORK, IEEE, US, vol. 2, 23 May 1993 (1993-05-23), pages 741-745, XP010137076, DOI: 10.1109/ICC.1993.397372 ISBN: 978-0-7803-0950-0**

- TUNGSRISAGUAN E ET AL: "SOFT-OUTPUT SEQUENTIAL ALGORITHM FOR SIGNAL ESTIMATION OVER FREQUENCY SELECTIVE FADING CHANNEL", GLOBECOM '01 : IEEE GLOBAL TELECOMMUNICATIONS CONFERENCE ; SAN ANTONIO, TEXAS, USA, 25 - 29 NOVEMBER 2001, IEEE OPERATIONS CENTER, PISCATAWAY, NJ, 25 November 2001 (2001-11-25), pages 1241-1245, XP001099303, DOI: 10.1109/GLOCOM.2001.965684 ISBN: 978-0-7803-7206-1
- HAGENAUER J ET AL: "A VITERBI ALGORITHM WITH SOFT-DECISION OUTPUTS AND ITS APPLICATIONS", COMMUNICATIONS TECHNOLOGY FOR THE 1990'S AND BEYOND. DALLAS, NOV. 27 - 30, 1989; [PROCEEDINGS OF THE GLOBAL TELECOMMUNICATIONS CONFERENCE AND EXHIBITION (GLOBECOM)], NEW YORK, IEEE, US, vol. 3 OF 03, 27 November 1989 (1989-11-27), pages 1680-1686, XP000091258,
- Vojin Senk ET AL: "AN OVERVIEW OF DECODING PROCEDURES FOR TRELLIS CODES", Proceedings of the Telecommunication Forum, TELFOR 1999, 1 November 1999 (1999-11-01), pages 257-264, XP055404853, Belgrade, Yugoslavia Retrieved from the Internet: URL:https://www.cs.indiana.edu/~predrag/papers/senk_telfor_1999.pdf [retrieved on 2017-09-07]
- QURESHI S U H ET AL: "REDUCED-STATE SEQUENCE ESTIMATION WITH SET PARTITIONING AND DECISION FEEDBACK", IEEE TRANSACTIONS ON COMMUNICATIONS, IEEE SERVICE CENTER, PISCATAWAY, NJ. USA, vol. 36, no. 1, 1 January 1988 (1988-01-01), pages 13-20, XP000758632, ISSN: 0090-6778, DOI: 10.1109/26.2724

**Description**

BACKGROUND

The present invention, in some embodiments thereof, relates to Faster-Than-Nyquist (FTN) data transmission and, more specifically, but not exclusively, to systems and methods for decoding of modulated symbols or compensating channel frequency response of the module symbols transmitted using FTN.

FTN signaling is a data transmission method which is beginning to be used widely in modern communication systems. FTN provides increasing data throughput via communications channels with a limited bandwidth. Because the channel magnitude response is not an ideal rectangular function, the data rate may be increased by about 20-30% over the channel bandwidth.

Increase of the data rate beyond the Nyquist frequency causes Inter-Symbol Interference (ISI). To obtain controllable ISI, a pre-filter is used in the transmitter. The pre-filter may be a short finite impulse response (FIR) filter (2...6 taps) with predefined coefficients. Use of the pre-filter reduces impact of analog components bandwidth on the receiver performance because the pre-filter has dominating bandwidth limitations.

REMI SFEZ ET AL: "A weighted-output variant of the viterbi algorithm for concatenated schemes using a convolutional inner code Une Variante À Sortie Pondérée De L'Aigorithme De Viterbi Pour Des Schemas Concaténés À Code Interieur Convolutif", 5 November 1990 (1990-11-05), EUROCODE '90, SPRINGER BERLIN HEIDELBERG, BERLIN, HEIDELBERG, PAGE (S) 259 - 270, describes a means for weighting the output of Viterbi decoding.

SESHADRI N ET AL: "On post-decision symbol-reliability generation", PROCEEDINGS OF THE INTERNATIONAL CONFERENCE ON COMMUNICATIONS (ICC). GENEVA, MAY 23 - 26, 1993; [PROCEEDINGS OF THE INTERNATIONAL

CONFERENCE ON COMMUNICATIONS (ICC)], NEW YORK, IEEE, US, val. 2, 23 May 1993 (1993-05-23), pages 741-745, describes a post-processor for providing reliability information about every decoded data symbol at the output of an arbitrary decoder.

QURESHI S U H ET AL: "REDUCED-STATE SEQUENCE ESTIMATION WITH SET PARTITIONING AND DECISION FEEDBACK", IEEE TRANSACTIONS ON COMMUNICATIONS, IEEE SERVICE CENTER, PISCATAWAY, NJ. USA, vol. 36, no. 1, 1 January 1988 (1988-01-01 ), pages 13-20, describes a reduced-state sequence estimator for linear intersymbol interference channels.

SUMMARY

It is an object of the present invention to provide an apparatus, a system, a computer program product, and a method for decoding of modulated symbols or compensating channel frequency response of the modulated symbols based on trellis equalization.

The foregoing and other objects are achieved by the features of the independent claims. Further implementation forms are apparent from the dependent claims, the description and the figures.

According to a first aspect, an apparatus for decoding of modulated symbols or compensating channel frequency response of the modulated symbols based on trellis equalization comprises: a processor configured to: identify a best path for a certain trellis stage of a main trellis of a received modulated symbol; identify a hard decision constellation point of the main trellis by performing a traceback according to the best path; select neighboring constellation points of the hard decision constellation point; compute a respective secondary trellis for each selected neighboring constellation points that differ from the hard decision constellation point by one bit; compute a LLR for each respective bit of the received modulated symbol by calculating using each respective secondary trellis, the difference between the best path metric of the received modulated symbol and the respective secondary trellis of the respective bit; and provide, the computed LLR to a forward error correction (208), FEC, decoder for decoding the received modulated symbol.

According to a second aspect, a method for decoding of modulated symbols comprises: identifying a best path for a certain trellis stage of a main trellis of a received modulated symbol; identifying a hard decision constellation point of the main trellis by performing a traceback according to the best path; selecting neighboring constellation points of the hard decision constellation point; computing a respective secondary trellis for each neighboring constellation points that differ from the hard decision constellation point by one bit; computing a LLR for each respective bit of the received modulated symbol by calculating using each respective secondary trellis, the difference between the best path metric of the received modulated symbol and the respective secondary trellis of the respective bit; and providing, the computed LLR to a forward error correction, FEC, decoder for decoding the received modulated symbol.

The modulating symbols are transmitted using ISI over a medium, optionally a wireless medium. The modulating symbols are optionally transmitted between user equipment and an access point (e.g., wireless access point (WAP), radio access network (RAN), and a base station) of a wireless network.

The apparatus and/or system and/or method (e.g., code instructions executed by one or more processors and/or implemented in hardware) described herein are optionally based on a soft decision MLSE method (the MLSE method is described below in additional detail) for equalization and/or convolutional decoding.

The apparatus and/or system and/or method (e.g., code instructions executed by one or more processors and/or implemented in hardware) described herein are designed to be implemented at the receiver, independently of the transmitter.

The apparatus and/or systems and/or methods (e.g., code instructions executed by processor(s) and/or hardware designed to executed the acts of the method) described herein apply a common method for each bit, avoiding, for example, using different methods to process different bits which may lead to system instability for varying channels. According to the claimed invention, the number of identified selected neighboring constellation point is equal to the number of bits per modulated symbol.

The apparatus and/or system and/or method (e.g., code instructions executed by one or more processors and/or implemented in hardware) described herein provides reduced complexity relative to the benchmark BCJR (e.g., MAP) method (the BCJR method is discussed below in additional detail), with performance similar to the BCJR method.

The number of calculation for each trellis stage is reduced by selecting a subset of the best path metrics within the set of the path metrics. The selected subset is used for the next stage update.

The apparatus and/or systems and/or methods (e.g., code instructions executed by processor(s) and/or hardware designed to executed the acts of the method) described herein may be implemented in hardware using a parallel architecture, since, for example, the trellis state reduction for the main and/or secondary trellises is performed without missing any bit values.

Further, according to the claimed invention, the modulation scheme of the modulated symbols is based on a member selected from the group consisting of: Quadrature Phase Shift Keying, QPSK, 8 Quadrature Amplitude Modulation, QAM, and 16QAM.

The apparatus and/or system and/or method (e.g., code instructions executed by one or more processors and/or implemented in hardware) described herein may be implemented using a common and/or similar design for different modulation methods, for example, QPSK and 8QAM.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

## BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

FIG. 1 is a flowchart of a method for decoding modulated symbols and/or compensating channel frequency response of the modulated symbols based on trellis equalization, in accordance with some embodiments of the present invention;

FIG. 2 is a diagram of components of a system that includes computing devices that transmit and receive modulated symbols, in accordance with some embodiments of the present invention;

FIG. 3 is a schematic of an example main trellis that illustrates computation of the best path determined according to a best path metrics determined for the last received modulated symbol, in accordance with some embodiments of the present invention;

FIG. 4 is a schematic of an example main trellis that illustrates determination of a hard decision constellation point, in accordance with some embodiments of the present invention;

FIG. 5 is a schematic that graphically depicts an exemplary method of selection of neighboring constellation points, in accordance with some embodiments of the present invention;

FIG. 6 is a schematic that graphically depicts selection of the neighboring constellation points of the hard decision constellation point based on smallest Euclidian distance, in accordance with some embodiments of the present invention;

FIG. 7 is a schematic that graphically depicts an example of performing the second pass for the LSB and computation of the LSB LLR, in accordance with some embodiments of the present invention;

FIG. 8 is a schematic that graphically depicts an example of performing the second pass for the MSB and computation of the LSB MLR, in accordance with some embodiments of the present invention;

FIG. 9 is a schematic that graphically depicts an exemplary state reduction for the main trellis based on a fixed tail group and a variable header group, in accordance with some embodiments of the present invention;

FIG. 10 is a schematic graphically depicting an example of state selection for different 8 QAM constellations for the case $L_H$=2, in accordance with some embodiments of the present invention;

FIG. 11 is an exemplary dataflow diagram depicting flow of data based on the method described with reference to FIG. 1, and/or as implemented by the system described with reference to FIG. 2, in accordance with some embodiments of the present invention;

FIG. 12 is a table depicting computational results of the number of operations per input symbol according to the systems and/or methods described herein versus the BCJR method for the case of 8QAM and 3-tap filter, in accordance with some embodiments of the present invention; and

FIG. 13 is a chart depicting calculated a post-FEC performance comparison according to the systems and/or methods described herein in reference to the BCJR method for the 2-tap and 3-tap filter cases, in accordance with some embodiments of the present invention.

## DETAILED DESCRIPTION

The present invention, in some embodiments thereof, relates to Faster-Than-Nyquist (FTN) data transmission and, more specifically, but not exclusively, to systems and methods for decoding of modulated symbols or compensating channel frequency response of the module symbols transmitted using FTN.

An aspect of some embodiments of the present invention relates to a system, and apparatus, and/or a method (e.g., code instructions executed by one or more processors and/or implemented in hardware) that computes LLR for each bit of each modulated symbol received by a receiver. The LLR is provided to a forward error correction (FEC) decoder for decoding the modulated symbols. The LLR is computed by calculating, using respective secondary trellises, the difference between the best path metric of the received modulated symbol and the respective secondary trellis of the respective bit. The respective secondary trellises are computed for each selected neighboring constellation point of a hard constellation point that differs from the hard decision constellation point by one bit. The hard decision constellation point is identified by performing a traceback of a best path of a certain trellis stage of a main trellis determined for the received modulated symbols.

The system and/or method (e.g., code instructions executed by one or more processors and/or implemented in hardware) described herein are optionally based on a soft decision MLSE method (the MLSE method is described below in additional detail) for equalization and/or convolutional decoding.

The system and/or method (e.g., code instructions executed by one or more processors and/or implemented in hardware) described herein are designed to be implemented at the receiver, independently of the transmitter.

The system and/or method (e.g., code instructions executed by one or more processors and/or implemented in hardware) described herein may be implemented using a common and/or similar design for different modulation methods, for example, QPSK and 8QAM.

The system and/or method (e.g., code instructions executed by one or more processors and/or implemented in hardware) described herein provides reduced complexity relative to the benchmark BCJR (e.g., MAP) method (the BCJR method is discussed below in additional detail), with performance similar to the BCJR method. The number of created secondary trellises may be reduced and/or minimized by the dual-pass processing described herein. The number of states of the main and/or secondary trellises may be reduced. The number of states for the main trellis may be selected to be equal to the number of information bits per symbol. The number of states for the secondary trellis may be selected to be equal to 1. The number of calculations performed for each trellis stage is reduced by selecting a subset of the best path metrics within the set of the path metrics. The selected subset is used for the next stage update.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

As used herein, the term *trellis* refers to a graph having nodes ordered into vertical slices representing time. Each node may be connected to every other node at an earlier and a later time (or state reduction may be used to reduce the number of connections). Each node of each time slice represents a certain permutation of the transmitted modulated symbol. Each time slice includes a set of nodes that include all of the possible permutations, or fewer nodes when state reduction is used.

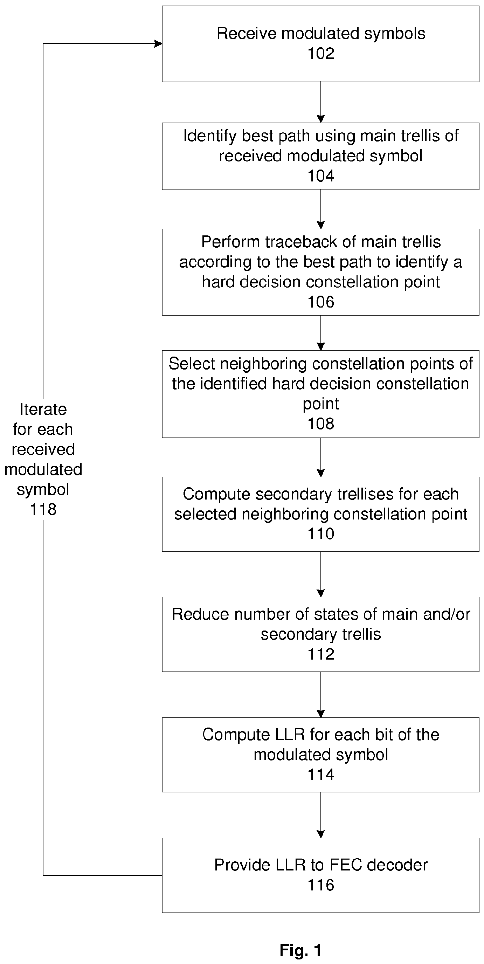

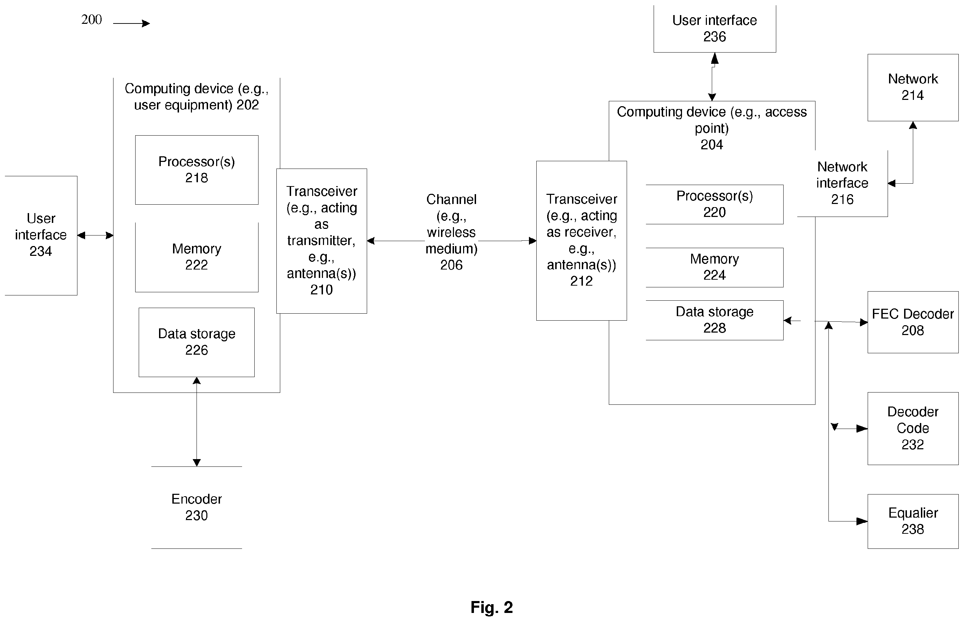

Reference is now made to FIG. 1, which is a flowchart of a method for decoding modulated symbols and/or compensating channel frequency response of the modulated symbols based on trellis equalization, in accordance with some embodiments of the present invention. The modulating symbols are transmitted using ISI over a medium, optionally a wireless medium. The modulating symbols are optionally transmitted between user equipment and an access point (e.g., wireless access point (WAP), radio access network (RAN), and a base station) of a wireless network. Reference is also made to FIG. 2, which is a diagram of components of a system 200 that includes computing devices 202 and 204 that transmit and receive modulated symbols over a channel 206, optionally at least including a wireless medium, using ISI, in accordance with some embodiments of the present invention. The transmitted modulated symbols are decoded and/or compensating channel frequency response of the modulated symbols based on trellis equalization is performed. The LLR computed for each bit of the received modulated symbols based on the difference between the best path metric of the received modulated symbol and the respective secondary trellis of the respective bit is provided to a forward error correction (FEC) decoder 208.

For clarity and simplicity of explanation, computing device 202 performs the functions of a transmitter, and computing device 204 performs the functions of a receiver. It is understood that each computing device 202 and 204 may perform both transmitter and receiver functions. Moreover, the case of a single computing device 202 communicating with one computing device 204 is depicted, however, it is understood that multiple computing devices 202 may communicate with a single computing device 204, a single computing device 202 may communicate with multiple computing devices 204, or multiple computing devices 202 may communicate with multiple device 204.

In an exemplary implementation, computing device 202 is implemented as user equipment (UE) communicating with an access point 204 (e.g., WAP, RAN, base station). UE 202 may be implemented as, for example, stationary device(s) and/or mobile device(s), for example, a smartphone, a watch computer, a glasses computer, a tablet, a desktop computer, a laptop, a server, a computing cloud, and a kiosk.

Computing device 204 (when acting as the access point) may be implemented as, for example, a standalone computer, a server, a distributed system, software installed on an existing device (e.g., base station equipment) and/or a hardware card or other component attached or inserted into the existing equipment.

Computing device 202 and 204 each respectively include a transceiver 210, 212 for communicating over channel 206. Transceiver 210 and/or 212 may be implemented as one or more antennas. For example, access point 204 may include multiple antennas arranged according to a wireless communication architecture and/or modulation scheme.

Channel 206 may be implemented according to the implemented wireless communication protocol and/or modulation scheme.

Computing device 204 may be implemented, for example, within a base station, a transmission tower, a RAN, or other network device that optionally provides wireless communication services between user equipment 202 and a network 214. Exemplary networks 214 include one or more of, the internet, a private network, a wireless cellular network, and a landline telephone network. Computing device 204 may include or be in communication with a network interface 216 for communicating with network 214.

Each computing device 202 and 204 includes a respective processor(s) 218, 220, which may be implemented as, for example, central processing unit(s) (CPU), graphics processing unit(s) (GPU), field programmable gate array(s) (FPGA), digital signal processor(s) (DSP), application specific integrated circuit(s) (ASIC), customized circuit(s), processors for interfacing with other units, and/or specialized hardware accelerators (e.g., encoders, decoders, and cryptography co-processors). Processor(s) 202 and/or 204 may include one or more processors (homogenous or heterogeneous), which may be arranged for parallel processing, as clusters and/or as one or more multi core processing units, for example, distributed across multiple virtual and/or physical servers, for example, located within a computing cloud and/or at multiple network connected processing nodes.

Each computing device 202 and 204 includes a respective memory 222, 224, that stores code instructions executed by processor(s) 218. It is noted that processor(s) 218 and/or 220 may be designed to implement in hardware one or more features stored as code instructions. Memory 222 and/or 224 may be implemented as, for example, a hard drive, a random access memory (RAM), read-only memory (ROM), an optical drive, and/or other storage devices.

Each computing device 202 and 204 may include a respective data storage device 226, 228 that stores data, for example, a random access memory (RAM), read-only memory (ROM), and/or a storage device, for example, non-volatile memory, magnetic media, semiconductor memory devices, hard drive, removable storage, optical media (e.g., DVD, CD-ROM), a remote storage server, and a computing cloud.

Computing device 202 (and/or 204) may store encode code 230 executed by the respective processor(s) to encode the symbols for transmission across channel 206, and/or encode 230 may be implemented in hardware.

Computing device 204 (and/or 202) may store decoder code 232 executed by the respective processor(s) to decode the received modulated symbols received after being transmitted across channel 206, and/or decoder 232 may be implemented in hardware. The acts described with reference to FIG. 1 may be implemented as decoder code 232.

Computing devices 202 and/or 204 may include or be in communication with a respective user interface 234 236 that a user uses to enter data and/or display (and/or hear) data, for example, one or more of: a touch-screen, a display, a keyboard, a mouse, voice activated software, and a microphone.

Computing device 204 (and/or 202) may store an equalizer 238, as code executed by the respective processor(s) and/or implemented as hardware. Equalizer 238 is used to compensate the ISI. Exemplary equalizers 238 used for FTN ISI compensation include:

   * Maximum Likelihood Sequence Estimation (MLSE) equalizer based on the Viterbi algorithm.

   * BCJR (Bahl, Cocke, Jelinek and Raviv) equalizer providing maximum a posteriori (MAP) solution.

For linear equalization with equal a priori probability of symbols, both methods provide similar bit error rate (BER) performance when hard decision is provided as the output value. The hard decision MLSE algorithm is relatively simpler in implementation relative to the BCJR method. When the FEC decoder 208 accepts a hard decision, use of the hard decision MLSE equalizer is preferable to improve performance.

For improved FEC performance, soft decision values are provided to the FEC decoder 208. The soft decision values are calculated by equalizer 238 as LLR.

A brief discussion of other methods for decoding of modulated symbols or compensating channel frequency response of the modulated symbols based on trellis equalization is now provided, to help clarify the technical advantage and/or technical solution provided by the systems and/or methods (e.g., code instructions executed by processor(s) and/or hardware designed to executed the acts of the method). The classic version of the MLSE method is unable to generate the LLRs. The BCJR algorithm or a modification of the Viterbi method (e.g., SOVA (Soft Output Viterbi Algorithm)) is implemented in some other solutions.

The BCJR algorithm traditionally provides the most optimal calculation of the LLRs, so it may be used as a reference for comparison with other methods.

The disadvantage of the BCJR algorithm is high complexity, which becomes unacceptable for long channel responses. To reduce the complexity, sub-optimal solutions are used by some of the other systems.

One example of another solution is described in United States Patent No. 7,042,938 (hereinafter the '938 patent), which describes a method and/or system designed to approach the BCJR performance. The systems and/or methods (e.g., code instructions executed by processor(s) and/or hardware designed to executed the acts of the method) described herein are designed to further improve performance in comparison to the '938 using the BCJR as benchmark.

The '938 runs the soft Viterbi algorithm with state reduction. Due to the state reduction, some bits in the trellis may have no alternative values (for example, some bit may be assigned only the value 0 but never assigned the value 1). To resolve no alternative value problem, a gap filler is used to calculate LLR for bits with missing values.

The LLRs are computed for different bits using different algorithms. The LLRs for the bits which have all values in the reduced trellis are calculated based on the SOVA algorithm. Other LLRs are calculated based on the DFE algorithm. The use of different methods to compute different cases reduces the performance of decoder described by the '938 patent. Because FTN filter coefficients affect a trellis state reduction pattern, the performance penalty varies according to the filter which may make the system unstable for varying channels. In contrast, the systems and/or methods (e.g., code instructions executed by processor(s) and/or hardware designed to executed the acts of the method) described herein apply a common method for the bits.

It appears that the method described by the '938 method is difficult (e.g., complex) to implement in hardware when the data rate is high. High data rates may be obtained by implementing a parallel data processing architecture. Since the algorithm of LLR calculation described in the '938 patent is variable and depends on results of the first soft-decision trellis, the number of bits requiring the gap filling processing is unknown. The unknown number of bits may be implemented using software, however, the unknown number of bits makes almost impossible to parallelize the architecture for hardware implementation. In contrast, the systems and/or methods (e.g., code instructions executed by processor(s) and/or hardware designed to executed the acts of the method) described herein may be implemented in hardware using a parallel architecture, since, for example, the trellis state reduction for the main and/or secondary trellises is performed without missing any bit values.

The method described with reference to FIG. 1 is discussed with reference to one modulated symbol for clarity. It is understood that the method applies to multiple modulated symbols, in parallel, and/or sequentially. For clarity and simplicity of explanation, the method with reference to FIG. 1 is described from the point of view of computing device 204, with execution of the acts of the method of FIG. 1 by computing device 204. However it is understood that the method is performed by computing device 202 during two way transmission between computing devices 202 and 204.

Referring now back to FIG. 1, at 102, modulated symbols transmitted by transceiver 210 of computing device 202 (e.g., user equipment) over channel 206 (optionally a wireless communication medium) are received by transceiver 212 of computing device 204 (e.g., access point).

Exemplary modulation schemes of the modulated symbols include: Quadrature Phase Shift Keying (QPSK), 8 Quadrature Amplitude Modulation (QAM), and 16 QAM.

At 104, a best path for a certain (e.g., current) trellis stage of a main trellis of the received modulated symbol is identified. In terms of mathematical notation, the main trellis includes N number of states. The main trellis may be computed by computing device 204.

The identification of the best path is sometimes referred to herein to as *first pass processing*. The first past processing performs a hard-decision.

The best path is identified for each trellis stage. The best path is identified according to the lowest path metrics, based on the following mathematical relationships:

$$PM_{best}(k+1) = \min_{j=0\ldots N-1}(PM_j(k+1))$$

$$PM_j(k+1) = \min_{i=0\ldots N-1}(PPM_{i,j}(k+1))$$

$$PPM_{i,j}(k+1) = PM_i(k) + BM_{i,j}(k+1)$$

EP 3 545 657 B1

where:

* $PM_{best}(k + 1)$ denotes the best path metrics,
* $PM_j(k + 1)$ denotes final path metrics for state $j$,
* $PPM_{i,j}(k + 1)$ denotes preliminary path metrics for transition from state $i$ to State j,
* $BM_{i,j}(k + 1)$ denotes branch metrics from state i to state j.

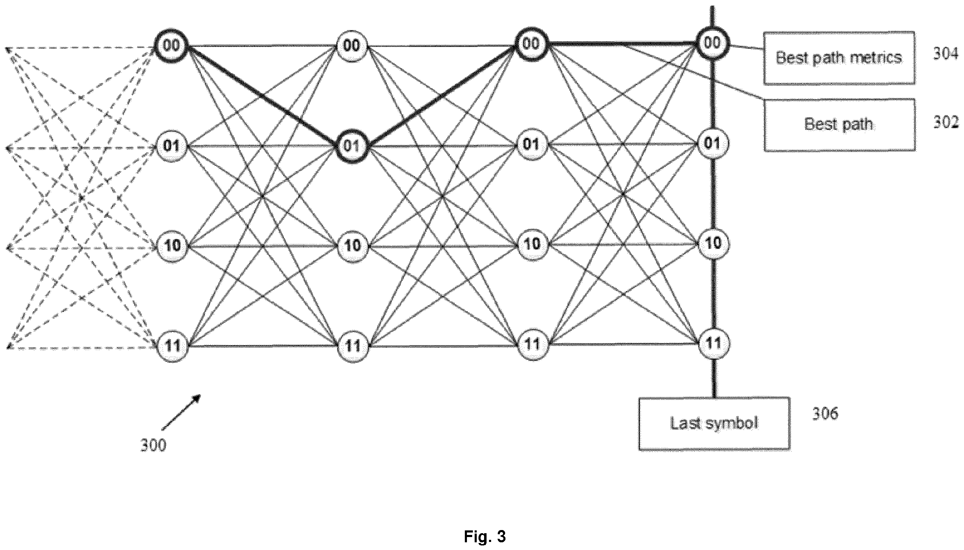

Reference is now made to FIG. 3, which depicts an example main trellis 300 to illustrate computation of the best path 302 determined according to a best path metrics 304 determined for the last received modulated symbol (i.e., the current trellis stage) 306, in accordance with some embodiments of the present invention. From left (i.e., earlier trellis stages) to the current trellis stage 306, best path 302 is 00 → 01 → 00 → 00.

Referring now back to FIG. 1, at 106, a traceback of the main trellis is performed according to the best path to identify a hard decision constellation point of the main trellis. The hard decision constellation point corresponds to the likeliest transmitted symbol.

The traceback may be performed using a register exchange method for which the history of hard decisions is updated on each trellis stage.

In terms of mathematical representation, the depth of the traceback is denoted as $D_{TB}$. The depth of the traceback is based on a length of a filter at the transmitter transmitting the modulated symbols. The depth of the traceback is selected to be large enough to provide reliable hard decisions according to a hard decision requirement (e.g., predefined by the mobile operator or another entity, and/or computed dynamically by code according to predefined parameters).

The first pass processing includes storing of the path metrics history for latest $D_{TB}$ trellis stages. The history is used for the second processing pass to calculate the LLRs.

The first processing pass identifies the hard decision constellation point, denote herein as HD(k + 1 - $D_{TB}$) and the path metrics corresponding to the identified hard decision constellation point. The hard decision constellation point and path metrics are determined for each trellis stage.

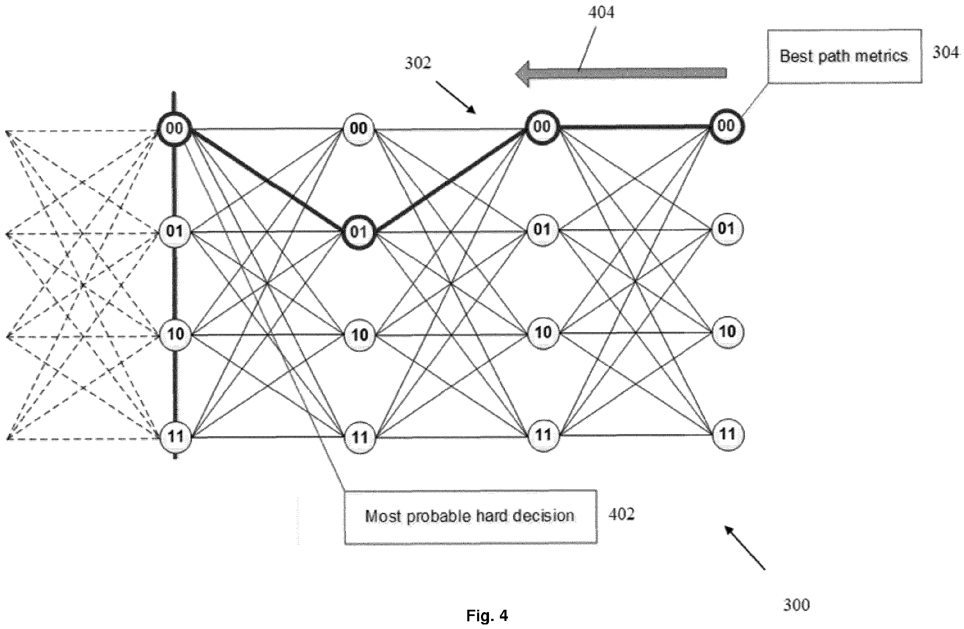

Reference is now made to FIG. 4, which depicts main trellis 300 (described with reference to FIG. 1) to illustrate determination of a hard decision constellation point 402, in accordance with some embodiments of the present invention. A traceback (depicted by arrow 404) of best path 302 (determined according to best path metrics 304) is performed until the predefined depth of the traceback, to identify hard decision constellation point 402.

Recalling best path 302: 00 → 01 → 00 → 00, the most probably hard decision constellation point 402 is identified as 00. The LLR is calculated for 00, as described herein.

At 108, neighboring constellation points of the identified hard decision constellation point are selected. Optionally, the number of identified selected neighboring constellation points is equal to the number of bits per modulated symbol.

One or more methods may be used to select the neighboring constellation point.

One exemplary method includes selecting a group of trellis states with opposite bits for each bit of the hard decision constellation point. Within each group of trellis states, the state within minimal path metrics is selected as the start state of the respective secondary trellis.

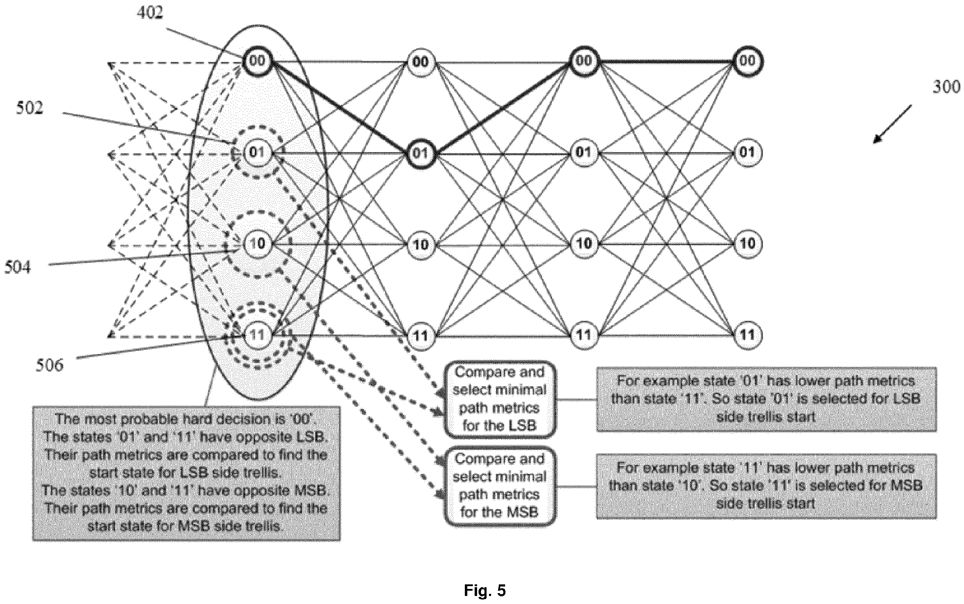

Reference is now made to FIG. 5, which graphically depicts the above described exemplary method of selection of neighboring constellation points 502-506 for identified hard decision constellation point 402 using trellis 300, in accordance with some embodiments of the present invention. The most probable hard decision constellation point 402 is identified as 00. The states 01 (call out number 502) and 11 (call out number 506) have opposite least significant bits (LSB). Their path metrics are compared to find the start state for the LSB side trellis. For example, state 01 (call out number 502) has lower path metrics than state 11 (call out number 506) so state 01 (call out number 502) is selected for the start of the LSB secondary trellis. The sates 10 (call out number 504) and 11 (call out number 506) have opposite most significant bit (MSB). Their path metrics are compared to find the start state for the MSB side trellis. For example, state 11 (call out number 506) has lower path metrics than state 10 (call out number 504) so state 11 (call out number 506) is selected for the start of the MSB secondary trellis.

Referring now back to block 108, another exemplary method for selecting the neighboring constellation points of the hard decision constellation point is based on using a constellation of the modulated symbol to identify the closest symbols having the smallest Euclidean distance to the likeliest transmitted symbol.

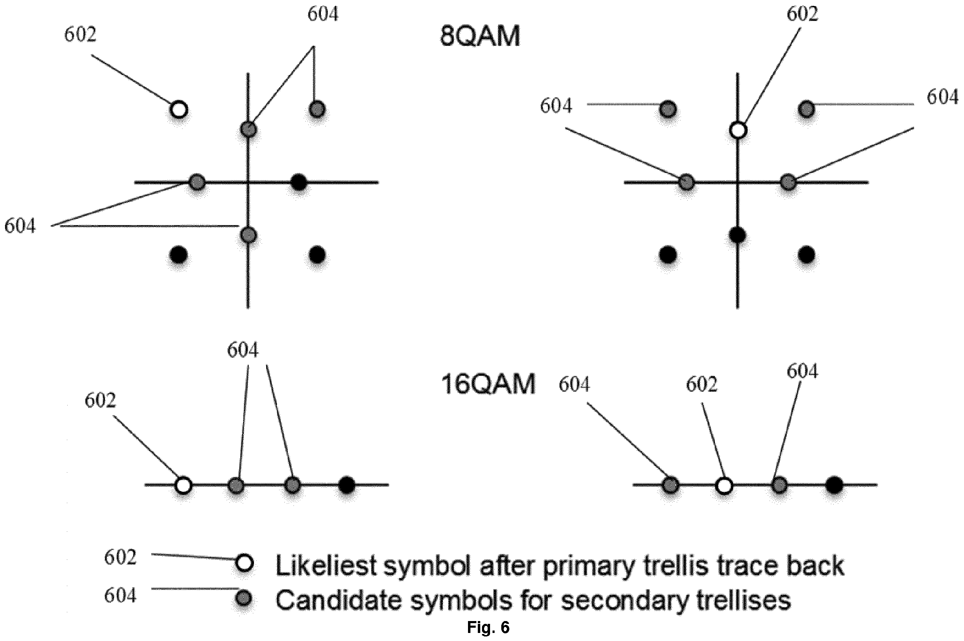

Reference is now made to FIG. 6, which is a schematic that graphically depicts selection of the neighboring constellation points of the hard decision constellation point based on smallest Euclidian distance, in accordance with some embodiments of the present invention. Call out number 602 denotes the likeliest symbol after the primary trellis is traced back. Call out number 604 denotes the selected neighboring constellation points, based on smallest Euclidian distance.

Optionally, when there are several candidate constellation points with the same Euclidean distance (e.g., as shown in FIG. 6 for the 8 QAM case), the candidate with the lowest path metrics may be selected.

Referring now back to FIG. 1, at 110, a respective secondary trellis for each selected neighboring constellation point that differs from the hard decision constellation point by one bit is computed. The number of secondary trellises is equal to the number of bits in the hard decision constellation point. For example, with reference to FIG. 5, the hard decision constellation point includes 2 bits. Two secondary trellises are created for each main trellis stage. In another example, for the 8 QAM case, three side trellises are created for each main trellis stage (joint I and Q). In yet another example, 4 secondary trellises are computed for each state of the main trellis for symbols modulated using 16QAM (separate 2 secondary trellises for I and 2 secondary trellises for Q).

Computation of the secondary trellises for each of the selected neighboring constellation point is sometimes referred to herein as *second pass.* The second pass includes a soft-decision. The second pass is used for LLR calculations and initial hard decision correction.

Optionally, the length of each secondary trellis is equal to the depth of the traceback.

Secondary trellises use the corresponding path metrics and trellis history from the main trellis as a start point.

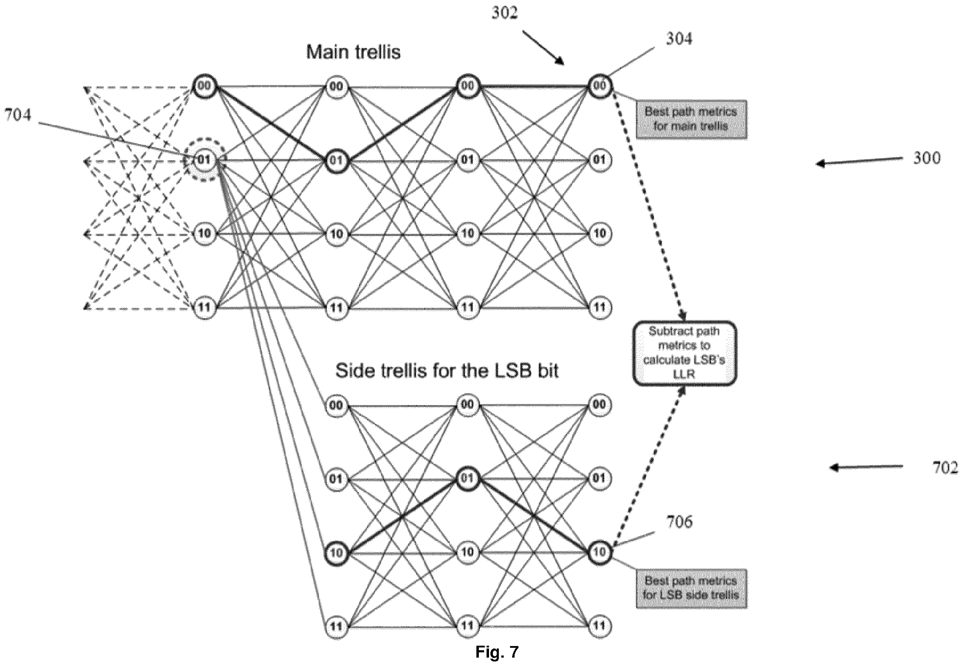

Reference is now made to FIG. 7, which graphically depicts an example of performing the second pass for the LSB and computation of the LSB LLR, in accordance with some embodiments of the present invention. A secondary trellis 702 is computed for main trellis 300 based on a selected neighboring constellation point 704, as described herein. The LLR is computed as described herein.

At 112, the number of states of the main and/or secondary trellis may be reduced. The trellis state reduction for the first pass and/or the second pass is performed without missing any bit values.

When no state reduction is performed, the number of states for the main (denoted as M) and secondary trellises (denoted as *N*) may be mathematically represented as:

$$M = N = B^{L-1},$$

where L denotes the number of filter taps.

In the no state reduction case, all M = N combination of data symbols are checked at each trellis stage. The number of calculated branch metrics may be mathematically represented as $B^L$. The total number of preliminary path metrics per trellis stage may be mathematically represented as $B^L$.

Optionally, stated reduction is performed by dividing the taps of the filter used by the transmitter transmitting the encoded symbols into a variable header group (also referred to herein as *first,* or *head*) of taps and a fixed last group of taps (also referred to herein as *second* or *tail),* mathematically represented as:

$$L = L_H + L_T,$$

where $L_H$ and $L_T$ respectively denote the number of head and tail filter taps.

The head taps are used for trellis building. The number of head taps (i.e., the number of members of the variable header group of taps) defines the reduced number of main and/or secondary trellis states based on the following mathematical relationship:

$$N_H = B^{L_H - 1}$$

The tail taps (i.e., variable header group) and/or fixed last group of taps may be used for branch metrics calculation. The symbols history corresponding to the tail (i.e. fixed last group) taps is fixed according to the previous trellis decisions. For each state of the current trellis stage is associated with a certain symbol history. The variable header group of tables is used for creation of the secondary trellis.

The total number of branch metrics and preliminary path metrics calculated at each trellis stage is denoted as $B^{LH}$.

For example, in an exemplary case $L_H = 2$ and $L_T = L_H - 2$. In the exemplary case, the number of trellis states is denoted as $N_H = B$. The number of branch metrics calculated at each trellis stage is denoted as $B^2$. For the exemplary case, the path and branch metrics are calculated based on the following mathematical relationships:

$$PM_j(k + 1) = \min_{i=0...N_H-1}(PPM_{i,j}(k + 1),$$

$$PPM_{i,j}(k + 1) = PM_i(k) + BM_{i,j}(k + 1),$$

$$BM_{i,j}(k+1) = \left( x(k+1) - \left( s_j + a_1 * s_i + \sum_{l=0}^{L_T-1} a_{l+2} * s_{h(i,k-1-l)} \right) \right)^2$$

where:

$s_i$ denotes the certain trellis state of the main trellis,

$s_j$ denotes the next trellis state of the variable header group,

$N_H$ denotes the number of trellis states,

$S_{h(i,k-1-l)}$ denotes the previous trellis states of the fixed last group,

h(i,k-1-l) denotes the state index in the state history,

h denotes the state history,

si denotes the state,

l denotes a delay in the fixed last group,

$PM_j(k+1)$ denotes the final path metrics for state j,

PPMi,j(k + 1) denotes the preliminary path metrics for transition from state i to state j,

$BM_{i,j}(k+1)$ denotes the branch metrics from state i to state j.

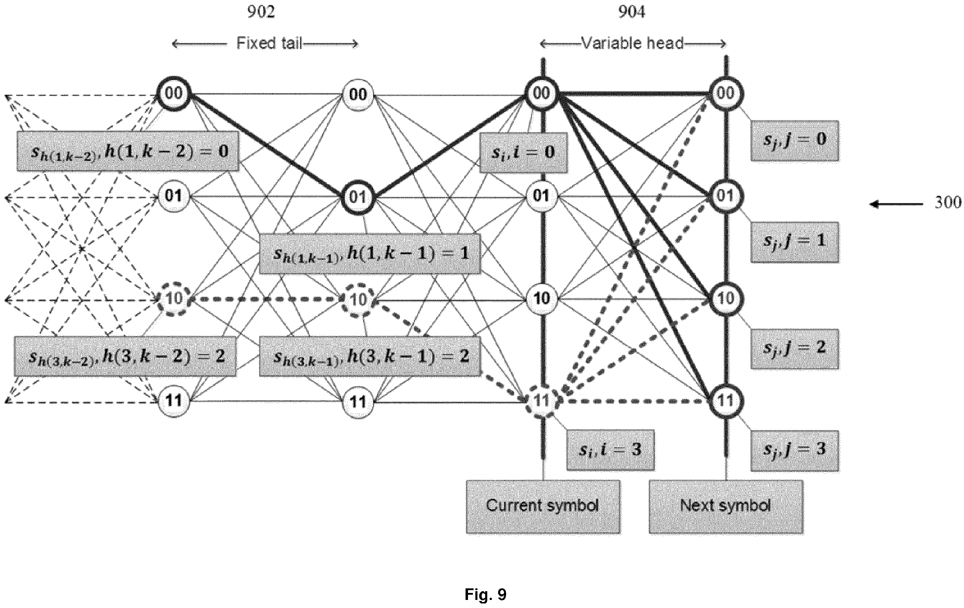

Reference is now made to FIG. 9, which graphically depicts an exemplary state reduction for trellis 300, based on a fixed tail group 902 and a variable header group 904, as described herein, in accordance with some embodiments of the present invention.

Alternatively or additionally (e.g., in addition to state reduction), the number of calculated branch and path metrics is reduced at each main and/or secondary trellis state. The reduction is performed based on selection of the M most probable states within the whole set of $N_H$ states. A subset of the most probable trellis states with the best path metrics is selected and the worst path metrics for the next trellis stage calculation is discarded.

The selection of the subset of the most probable trellis state with the best path metrics and the discarding of the worst path metrics is performed by dividing the trellis states into groups. The groups are determined based on the Euclidian distance between members of each group being maximal. For each group, the state is selected according to minimal path metrics. The selected state is used for calculation of new branch metrics and path metrics of the next trellis stage.

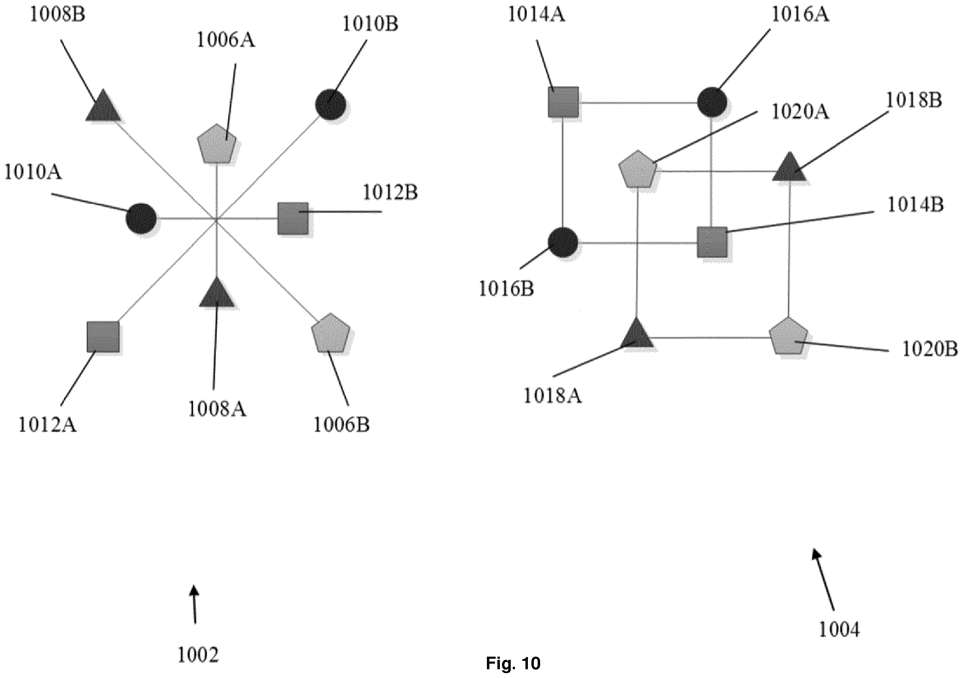

Reference is now made to FIG. 10, which is a schematic graphically depicting an example of state selection for different 8 QAM constellations 1002 1004 for the case $L_H$=2, in accordance with some embodiments of the present invention. Four groups are created for each constellation. For constellation 1002, the groups include: 1006A-B, 1008A-B, 1010A-B, and 1012A-B. For constellation 1004, the groups include: 1014A-B, 1016A-B, 1018A-B, and 1020A-B. For the 8QAM example, there are 4 groups of 2 states in each group. Within every group only one state with minimal path metrics is selected. The number of states used at the current trellis stage is M=4 instead of the total $N_H$=8 states.

Another exemplary method of state reduction (selection of M states with minimal path metrics within multiple $N_H$ states) is based on a decision feedback equalizer (DFE). The number of states selected for main ($M_M$) and side (Ms) trellises may be different. For example, for the main trellis, $M_M$= $N_H$/2 may be used without significant performance penalty. For the secondary trellises, state reduction may be performed more drastically without incurring significant performance penalty. For example, the number of states for the secondary trellis may be reduced to $M_S$=1. In such a case, the secondary trellis calculation may be computed using the DFE method according to the relationships:

$$PM(k+1) = PM(k) + \min_{j=0...B-1}(BM_j(k+1))$$

$$BM_j(k+1) = \left( x(k+1) - \left( s_j + \sum_{l=1}^{L-1} a_l * s_{h(k+1-l)} \right) \right)^2$$

At 114, the LLR is computed for each respective bit of the received modulated symbol using each respective secondary trellis. The LLR is computed as the difference between the best path metric of the received modulated symbol and the respective secondary trellis of the respective bit.

Referring now back to FIG. 7, the LLR for the LSB is computed as the difference between best path metrics 304 of the received modulated symbol (using main trellis 300) and best path metrics 706 of secondary trellis 702.

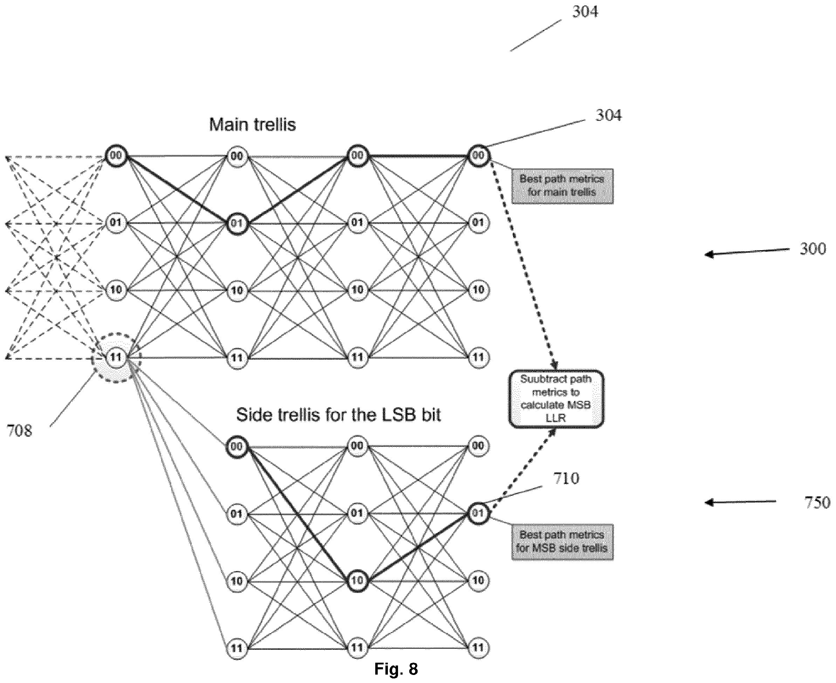

Reference is now made to FIG. 8, which graphically depicts an example of performing the second pass for the MSB and computation of the LSB MLR, in accordance with some embodiments of the present invention. A secondary trellis 750 is computed for main trellis 300 based on a selected neighboring constellation point 708, as described herein. The LLR for the MSB is computed as the difference between best path metrics 304 of the received modulated symbol (using main trellis 300) and best path metrics 710 of secondary trellis 750.

Referring now back to block 114, the best path metrics obtained from the first and second passes are used for LLR calculations and the final hard decision.

In terms of mathematical representation:

$D_{ST}$ denotes the number of states of each secondary trellis.

The LLR for bit number b in a symbol is calculated based on the following mathematical relationship:

$$LLR_b(k + 1 - D_{TB}) = PM_{best}(k + 1 - D_{TB} + D_{ST}) - \min_{m=0,...,M-1} PM_{b,m}(D_{TB}),$$

where $PM_{b,l}(D_{TB})$ denotes the last path metrics of the secondary trellis corresponding to the bit number b = 0, ..., B — 1,

M denotes the number of secondary trellis states.

When (possible in most cases) $D_{ST}$ = $D_{TB}$, then

$$LLR_b(k + 1 - D_{TB}) = PM_{best}(k + 1) - \min_{m=0,...,M-1} PM_{b,l}(D_{TB})$$

At 116, the computed LLR is provided to FEC decoder 208 for decoding the received modulated symbol.

At 118, blocks 102-116 are iterated for each received modulated symbol.

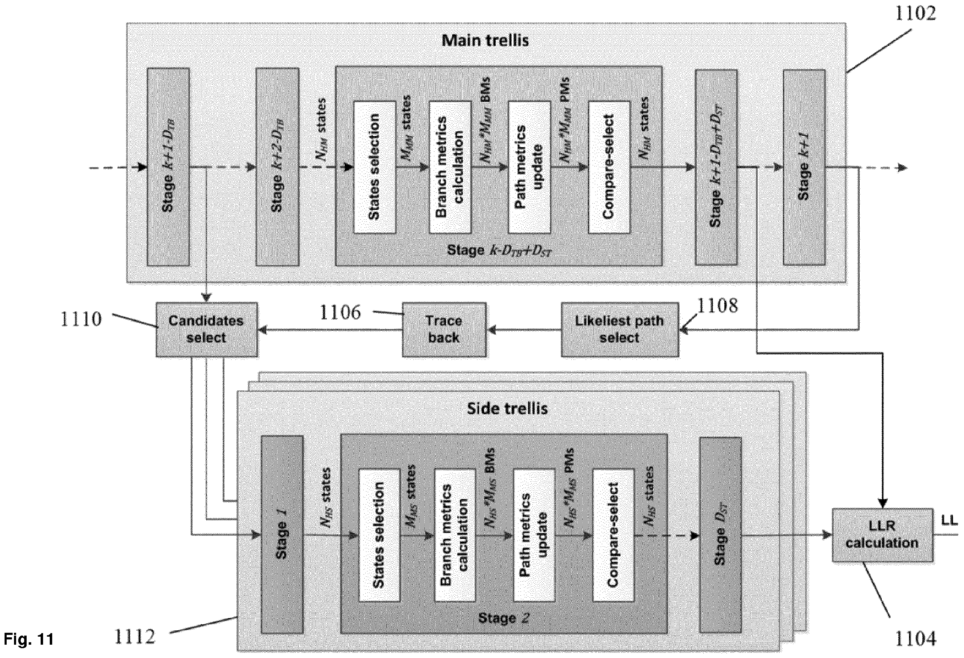

Reference is now made to FIG. 11, which is an exemplary dataflow diagram depicting flow of data based on the method described with reference to FIG. 1, and/or as implemented by system 200 described with reference to FIG. 2, in accordance with some embodiments of the present invention.

As depicted in FIG. 11, the hard decision estimation is performed according to the Viterbi algorithm using main trellis 1102. For each trellis stage, path metrics are stored for the subsequent LLR calculation 1104. For each current trellis stage, traceback 1106 is performed from a state with the best path metrics (likeliest path select 1108). The traceback is performed by back propagation through the trellis stages according to a decision at each stage. The traceback identifies a hard decision constellation point. A traceback depth may correspond to a hard decision delay which is selected to be sufficient for reliable hard decision. For each identified hard decision constellation point, one or more neighboring constellation points are selected 1110. These selected neighboring constellation points are different from the hard decision point by one of the information bits. The amount of additional points is equal to the number of information bits per symbol. For each additional point, a secondary trellis is initialized 1112. The length of the secondary trellis may be defined according to the decision delay. The LLR 1104 is calculated as the difference between the best path metrics of the main trellis 1102 and the secondary trellis. The number of calculated LLR values per trellis stage is equal to the number of information bits per symbol.

Various implementations and aspects as delineated hereinabove and as claimed in the claims section below find calculated support in the following examples.

**EXAMPLES**

Reference is now made to the following examples, which together with the above descriptions illustrate some embodiments in a non-limiting fashion.

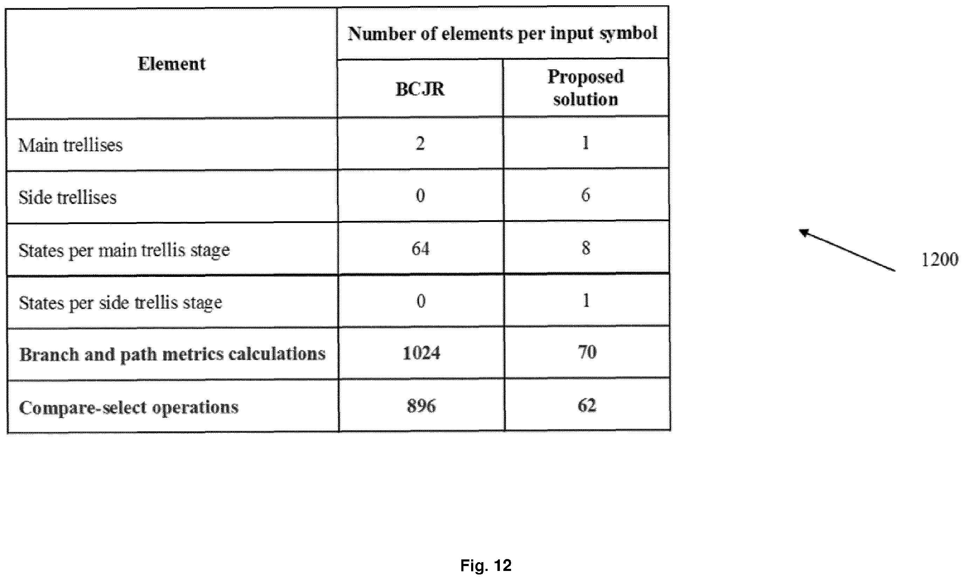

Reference is now made to FIG. 12, which is a table 1200 depicting the number of operations per input symbol according to the systems and/or methods described herein versus the BCJR method for the case of 8QAM and 3-tap filter, in accordance with some embodiments of the present invention. As shown in table 1200, the systems and/or methods described herein provide a statistically significant saving of computational resources (e.g., processing time, processor utilization, memory usage) in comparison to the BCJR method.

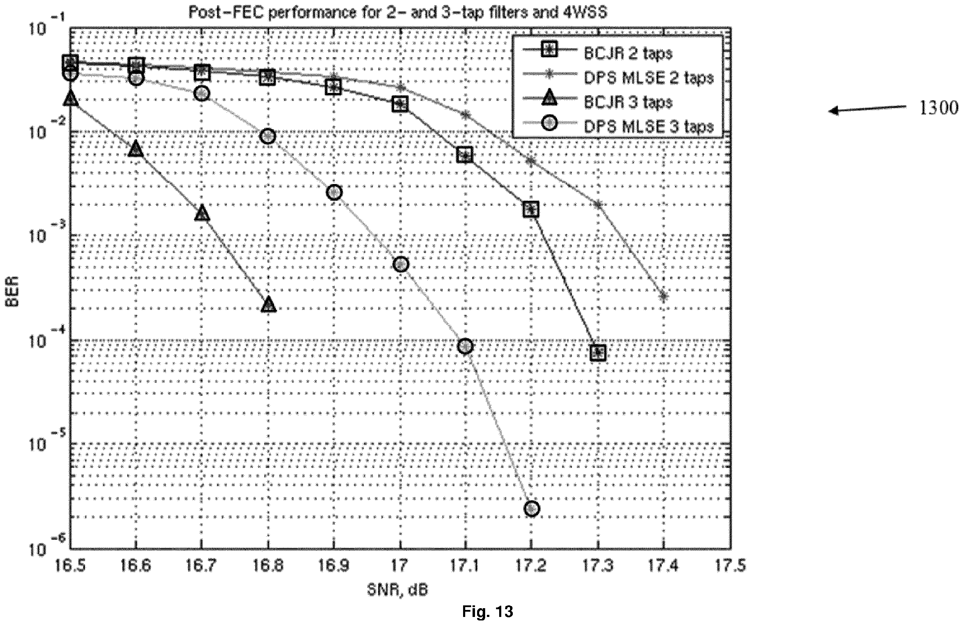

Reference is now made to FIG. 13, which is a chart 1300 depicting post-FEC performance comparison according to the systems and/or methods described herein in reference to the BCJR method for the 2-tap and 3-tap filter cases, in accordance with some embodiments of the present invention. For the 3-tap filter, the penalty in comparison to the BCJR method is about 0.25 decibels (dB). Chart 1300 illustrates the reduction of area and power using the systems and/or methods described herein is achieved using small performance degradation.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant modulation methods, and transceivers will be developed and the scope of the terms modulation methods and transceivers are intended to include all such new technologies a priori.

As used herein the term "about" refers to $\pm$ 10 %.

The terms "comprises", "comprising", "includes", "including", "having" and their conjugates mean "including but not limited to". This term encompasses the terms "consisting of' and "consisting essentially of'.

The phrase "consisting essentially of' means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Citation or identification of any reference in this application shall not be construed as an admission that such reference is available as prior art to the present invention. To the extent that section headings are used, they should not be construed as necessarily limiting.

**EP 3 545 657 B1**

**Claims**

1. An apparatus (204) for decoding of modulated symbols or compensating channel frequency response of the modulated symbols based on trellis equalization, wherein a modulation scheme of the modulated symbols is based on a member selected from the group consisting of: Quadrature Phase Shift Keying, QPSK, 8 Quadrature Amplitude Modulation, QAM, and 16QAM, the apparatus comprising:
a processor (220) configured to:

   identify a best path for a certain trellis stage of a main trellis of a received modulated symbol;
   identify a hard decision constellation point of the main trellis by performing a traceback according to the best path;
   select neighboring constellation points of the hard decision constellation point, wherein the number of identified selected neighboring constellation point is equal to the number of bits per modulated symbol;
   compute a respective secondary trellis for each selected neighboring constellation points that differ from the hard decision constellation point by one bit;
   compute a LLR for each respective bit of the received modulated symbol by calculating using each respective secondary trellis, the difference between the best path metric of the received modulated symbol and the respective secondary trellis of the respective bit; and
   provide, the computed LLR to a forward error correction (208), FEC, decoder for decoding the received modulated symbol.

2. The apparatus of claim 1, wherein the depth of the traceback is based on a length of a filter at the transmitter (210) transmitting the modulated symbols, the depth selected to be large enough to provide reliable hard decisions according to a hard decision requirement.

3. The apparatus according to any of the previous claims, wherein the length of each secondary trellis is equal to the depth of the traceback.

4. The apparatus according to any of the previous claims, wherein the processor (220) is further configured to select the start state of each secondary trellis by:

   selecting a group of trellis states with opposite bits for each bit of the hard decision constellation point; and
   within each group of trellis states, selecting the state within minimal path metrics as the start state of the respective secondary trellis.

5. The apparatus according to any of the previous claims, wherein the processor (220) is further configured to select the neighboring constellation points of the hard decision constellation point by using a constellation of the modulated symbol to identify the closest symbols having the smallest Euclidean distance to the likeliest transmitted symbol.

6. The apparatus according to any of the previous claims, wherein the processor (220) is further configured to reduce the number of states of the secondary trellis by performing:

   dividing the taps of the filter used by the transmitter (210) transmitting the encoded symbols into a first group of taps and a second group of taps;
   wherein the number of members of the first group of taps defines the reduced number of secondary trellis states;
   wherein the first group of taps and the second group of taps are used for branch metric calculations;
   wherein the symbol history corresponding to the second group of taps is fixed according to the previous trellis decisions, wherein each state of the certain trellis stage is associated with a certain symbol history.

7. The apparatus according to any of the previous claims, wherein the processor (220) is further configured to perform complexity reduction at each trellis stage by selecting a subset of most probable trellis states with the best path metrics and discarding the worst path metrics for the next trellis stage calculation.

8. The apparatus according to claim 7, wherein the selecting of the subset of most probable trellis state with the best path metrics and discarding the worst path metrics is performed by dividing the trellis states into groups wherein a Euclidian distance between members of each group is maximal, and for each group selecting the state according to minimal path metrics, wherein the selected state is used for calculation of new branch metrics and path metrics of the next trellis stage.

14

9. The apparatus according to any of the previous claims, wherein the processor (220) is further configured to reduce the number of states of the secondary trellises according to decision feedback equalizer (238), DFE, complexity.

10. The apparatus according to any of the previous claims, wherein 3 secondary trellis are computed for each state of the main trellis for symbols modulated using 8QAM, and wherein 4 secondary trellis are computed for each state of the main trellis for symbols modulated using 16QAM

11. A method for decoding of modulated symbols, wherein a modulation scheme of the modulated symbols is based on a member selected from the group consisting of: Quadrature Phase Shift Keying, QPSK, 8 Quadrature Amplitude Modulation, QAM, and 16QAM, the method comprising:

   identifying a best path for a certain trellis stage of a main trellis of a received modulated symbol (104);
   identifying a hard decision constellation point of the main trellis by performing a traceback according to the best path (106);
   selecting neighboring constellation points of the hard decision constellation point (108), wherein the number of identified selected neighboring constellation point is equal to the number of bits per modulated symbol;
   computing a respective secondary trellis for each neighboring constellation points that differ from the hard decision constellation point by one bit (110);
   computing a LLR for each respective bit of the received modulated symbol by calculating using each respective secondary trellis, the difference between the best path metric of the received modulated symbol and the respective secondary trellis of the respective bit (114); and
   providing, the computed LLR to a forward error correction, FEC, decoder for decoding the received modulated symbol (116).

12. A computer readable medium (224, 228) comprising a computer program which comprises instructions which, when being executed by a processor of a computer, cause the computer to carry out the preceding method.

**Patentansprüche**

1. Einrichtung (204) zum Decodieren von modulierten Symbolen oder Kompensieren eines Kanalfrequenzgangs der modulierten Symbole basierend auf einer Trellis-Entzerrung, wobei ein Modulationsschema der modulierten Symbole auf einem Element basiert, das ausgewählt ist aus der Gruppe bestehend aus:

   Quadraturphasenumtastung, QPSK, 8 Quadraturamplitudenmodulation, QAM, und 16QAM, die Einrichtung umfassend:
   einen Prozessor (220), der ausgelegt ist zum:
   Identifizieren eines besten Pfads für eine bestimmte Trellis-Stufe eines Haupt-Trellis eines empfangenen modulierten Symbols;
   Identifizieren eines Konstellationspunkts einer harten Entscheidung des Haupt-Trellis durch Durchführen einer Rückverfolgung gemäß dem besten Pfad;
   Auswählen von benachbarten Konstellationspunkten des Konstellationspunkts einer harten Entscheidung, wobei die Anzahl von identifizierten ausgewählten benachbarten Konstellationspunkten gleich der Anzahl von Bits pro moduliertem Symbol ist;
   Berechnen eines jeweiligen sekundären Trellis für alle ausgewählten benachbarten Konstellationspunkte, die sich vom Konstellationspunkt einer harten Entscheidung um ein Bit unterscheiden;
   Berechnen eines LLR für jedes jeweilige Bit des empfangenen modulierten Symbols durch Berechnen, unter Verwendung jedes jeweiligen sekundären Trellis, der Differenz zwischen der besten Pfadmetrik des empfangenen modulierten Symbols und
   dem jeweiligen sekundären Trellis des jeweiligen Bits und
   Bereitstellen des berechneten LLR an einen Decoder zur Vorwärtsfehlerkorrektur (208), FEC, zum Decodieren des empfangenen modulierten Symbols.

2. Einrichtung nach Anspruch 1, wobei die Tiefe der Rückverfolgung auf einer Länge eines Filters an dem Sender (210) basiert, der die modulierten Symbole überträgt, wobei die ausgewählte Tiefe groß genug sein muss, um zuverlässig harte Entscheidungen gemäß einer Anforderung einer harten Entscheidung bereitzustellen.

3. Einrichtung nach einem der vorstehenden Ansprüche, wobei die Länge jedes sekundären Trellis gleich der Tiefe der Rückverfolgung ist.

4. Einrichtung nach einem der vorstehenden Ansprüche, wobei der Prozessor (220) ferner zum Auswählen des Startzustands jedes sekundären Trellis ausgelegt ist durch:

Auswählen einer Gruppe von Trellis-Zuständen mit entgegengesetzten Bits für jedes Bit des Konstellationspunkts einer harten Entscheidung und
innerhalb jeder Gruppe von Trellis-Zuständen, Auswählen des Zustands innerhalb minimaler Pfadmetriken als den Startzustand des jeweiligen sekundären Trellis.

5. Einrichtung nach einem der vorstehenden Ansprüche, wobei der Prozessor (220) ferner zum Auswählen der benachbarten Konstellationspunkte des Konstellationspunkts einer harten Entscheidung durch Verwenden einer Konstellation des modulierten Symbols zum Identifizieren der nächsten Symbole, die den kleinsten euklidischen Abstand zu dem wahrscheinlichsten übertragenen Symbol aufweist, ausgelegt ist.

6. Einrichtung nach einem der vorstehenden Ansprüche, wobei der Prozessor (220) ferner zum Reduzieren der Anzahl von Zuständen des sekundären Trellis ausgelegt ist durch Durchführen von:

Teilen der Koeffizienten des Filters, das durch den Sender (210) verwendet wird, der die codierten Symbole überträgt, in eine erste Gruppe von Koeffizienten und eine zweite Gruppe von Koeffizienten;
wobei die Anzahl von Elementen der ersten Gruppe von Koeffizienten die reduzierte Anzahl von sekundären Trellis-Zuständen definiert;
wobei die erste Gruppe von Koeffizienten und die zweite Gruppe von Koeffizienten zu Zweigmetrikberechnungen verwendet werden;
wobei der Symbolverlauf entsprechend der zweiten Gruppe von Koeffizienten gemäß den vorherigen Trellis-Entscheidungen fest ist, wobei jeder Zustand der bestimmten Trellis-Stufe einem bestimmten Symbolverlauf zugeordnet ist.

7. Einrichtung nach einem der vorstehenden Ansprüche, wobei der Prozessor (220) ferner zum Durchführen einer Komplexitätsreduzierung an jeder Trellis-Stufe durch Auswählen eines Teilsatzes von wahrscheinlichsten Trellis-Zuständen mit den besten Pfadmetriken und Verwerfen der schlechtesten Pfadmetriken für die nächste Trellis-Stufen-Berechnung ausgelegt ist.

8. Einrichtung nach Anspruch 7, wobei das Auswählen des Teilsatzes von wahrscheinlichsten Trellis-Zuständen mit den besten Pfadmetriken und Verwerfen der schlechtesten Pfadmetriken durch Teilen der Trellis-Zustände in Gruppen, wobei ein euklidischer Abstand zwischen Elementen jeder Gruppe maximal ist, und, für jede Gruppe, Auswählen des Zustands gemäß minimalen Pfadmetriken durchgeführt wird, wobei der ausgewählte Zustand zur Berechnung neuer Zweigmetriken und Pfadmetriken der nächsten Trellis-Stufe verwendet wird.

9. Einrichtung nach einem der vorstehenden Ansprüche, wobei der Prozessor (220) ferner zum Reduzieren der Anzahl von Zuständen der sekundären Trellise gemäß einer Komplexität eines Entscheidungsrückkopplungsentzerrers (238), DFE, ausgelegt ist.

10. Einrichtung nach einem der vorstehenden Ansprüche, wobei 3 sekundäre Trellis für jeden Zustand des Haupt-Trellis für Symbole, die unter Verwendung von 8QAM moduliert werden, berechnet werden und wobei 4 sekundäre Trellis für jeden Zustand des Haupt-Trellis für Symbole, die unter Verwendung von 16QAM moduliert werden, berechnet werden.

11. Verfahren zum Decodieren von modulierten Symbolen, wobei ein Modulationsschema der modulierten Symbole auf einem Element basiert, das ausgewählt ist aus der Gruppe bestehend aus: Quadraturphasenumtastung, QPSK, 8 Quadraturamplitudenmodulation, 8QAM, und 16QAM, das Verfahren umfassend:

Identifizieren eines besten Pfads für eine bestimmte Trellis-Stufe eines Haupt-Trellis eines empfangenen modulierten Symbols (104);
Identifizieren eines Konstellationspunkts einer harten Entscheidung des Haupt-Trellis durch Durchführen einer Rückverfolgung gemäß dem besten Pfad (106);
Auswählen von benachbarten Konstellationspunkten des Konstellationspunkts einer harten Entscheidung (108), wobei die Anzahl von identifizierten ausgewählten benachbarten Konstellationspunkten gleich der Anzahl von Bits pro moduliertem Symbol ist;

Berechnen eines jeweiligen sekundären Trellis für alle benachbarten Konstellationspunkte, die sich vom Konstellationspunkt einer harten Entscheidung um ein Bit unterscheiden (110);

Berechnen eines LLR für jedes jeweilige Bit des empfangenen modulierten Symbols durch Berechnen, unter Verwendung jedes jeweiligen sekundären Trellis, der Differenz zwischen der besten Pfadmetrik des empfangenen modulierten Symbols und

dem jeweiligen sekundären Trellis des jeweiligen Bits (114) und

Bereitstellen des berechneten LLR an einen Decoder zur Vorwärtsfehlerkorrektur, FEC, zum Decodieren des empfangenen modulierten Symbols (116).

12. Computerlesbares Medium (224, 228), umfassend ein Computerprogramm, das Anweisungen umfasst, die bei Ausführung durch einen Prozessor eines Computers den Computer dazu veranlassen, das vorstehende Verfahren auszuführen.

## Revendications

1. Appareil (204) destiné au décodage de symboles modulés ou à la compensation de la réponse en fréquence de canal des symboles modulés sur la base d'une égalisation en treillis, un principe de modulation des symboles modulés étant fondé sur un élément sélectionné à partir du groupe constitué par : modulation par déplacement en quadrature de phase, QPSK, modulation d'amplitude en quadrature, QAM, à 8 valeurs, et modulation 16QAM, l'appareil comprenant :
un processeur (220) configuré pour :

identifier une meilleure voie pour un certain étage de treillis appartenant à un treillis principal d'un symbole modulé reçu ;
identifier un point de constellation de décision binaire du treillis principal en effectuant un traçage en retour en fonction de la meilleure voie ;
sélectionner des points de constellation voisins du point de constellation de décision binaire, le nombre de points de constellation voisins sélectionnés identifiés étant égal au nombre de bits par symbole modulé ;
calculer un treillis secondaire respectif pour chaque point de constellation voisin sélectionné qui diffère d'un bit du point de constellation de décision binaire ;
calculer un paramètre LLR pour chaque bit respectif du symbole modulé reçu en calculant, en utilisant chaque treillis secondaire respectif, la différence entre la mesure de meilleure voie du symbole modulé reçu et le treillis secondaire respectif du bit respectif ; et
délivrer le paramètre LLR calculé à un décodeur par correction d'erreur sans voie de retour (208), FEC, pour décoder le symbole modulé reçu.

2. Appareil selon la revendication 1, dans lequel la profondeur du traçage en retour est fondée sur une longueur d'un filtre au niveau de l'émetteur (210) transmettant les symboles modulés, la profondeur étant sélectionnée pour être suffisamment large pour fournir des décisions binaires fiables en fonction d'une exigence concernant les décisions binaires.

3. Appareil selon l'une quelconque des revendications précédentes, dans lequel la longueur de chaque treillis secondaire est égale à la profondeur du traçage en retour.

4. Appareil selon l'une quelconque des revendications précédentes, dans lequel le processeur (220) est en outre configuré pour sélectionner l'état de démarrage de chaque treillis secondaire grâce à :

la sélection d'un groupe d'états de treillis comportant des bits opposés pour chaque bit du point de constellation de décision binaire, et
dans chaque groupe d'états de treillis, la sélection de l'état dans des mesures de voie minimales comme l'état de démarrage du treillis secondaire respectif.

5. Appareil selon l'une quelconque des revendications précédentes, dans lequel le processeur (220) est en outre configuré pour sélectionner les points de constellation voisins du point de constellation de décision binaire en utilisant une constellation du symbole modulé pour identifier les symboles les plus proches présentant la distance euclidienne la plus petite au symbole transmis le plus probable.

**6.** Appareil selon l'une quelconque des revendications précédentes, dans lequel le processeur (220) est en outre configuré pour réduire le nombre d'états du treillis secondaire en effectuant :

la division des prises du filtre utilisé par l'émetteur (210) transmettant les symboles codés en un premier groupe de prises et un second groupe de prises,

dans lequel le nombre d'éléments du premier groupe de prises définit le nombre réduit d'états de treillis secondaire,

dans lequel le premier groupe de prises et le second groupe de prises sont utilisés pour des calculs de mesures de branches,

dans lequel l'historique des symboles correspondant au second groupe de prises est fixé en fonction des décisions précédentes concernant le treillis, chaque état du certain étage de treillis étant associé à un certain historique de symboles.

**7.** Appareil selon l'une quelconque des revendications précédentes, dans lequel le processeur (200) est en outre configuré pour effectuer une réduction de complexité à chaque étage de treillis en sélectionnant un sous-ensemble d'états de treillis les plus probables présentant les mesures de meilleure voie et en rejetant les mesures de moins bonne voie pour le calcul de l'étage suivant de treillis.

**8.** Appareil selon la revendication 7, dans lequel la sélection du sous-ensemble d'états de treillis les plus probables présentant les mesures de meilleure voie et le rejet des mesures de moins bonne voie sont effectués en divisant les états de treillis en groupes, une distance euclidienne entre des éléments de chaque groupe étant maximale, et pour chaque groupe, en sélectionnant l'état en fonction de mesures de voie minimales, l'état sélectionné étant utilisé pour le calcul de nouvelles mesures de branche et mesures de voie de l'étage de treillis suivant.

**9.** Appareil selon l'une quelconque des revendications précédentes, dans lequel le processeur (220) est en outre configuré pour réduire le nombre d'états des treillis secondaires en fonction d'une complexité d'égaliseur par rétroaction de décision (238), DFE.

**10.** Appareil selon l'une quelconque des revendications précédentes, dans lequel 3 treillis secondaires sont calculés pour chaque état du treillis principal pour des symboles modulés en utilisant la modulation 8QAM, et dans lequel 4 treillis secondaires sont calculés pour chaque état du treillis principal pour des symboles modulés en utilisant la modulation 16QAM.

**11.** Procédé de décodage de symboles modulés, un principe de modulation des symboles modulés étant fondé sur un élément sélectionné à partir du groupe constitué par :
modulation par déplacement en quadrature de phase, QPSK, modulation d'amplitude en quadrature, QAM, à 8 valeurs, et modulation 16QAM, le procédé comprenant :

l'identification d'une meilleure voie pour un certain étage de treillis appartenant à un treillis principal d'un symbole modulé reçu (104) ;

l'identification d'un point de constellation de décision binaire du treillis principal en effectuant un traçage en retour en fonction de la meilleure voie (106) ;

la sélection de points de constellation voisins du point de constellation de décision binaire (108), le nombre de points de constellation voisins sélectionnés identifiés étant égal au nombre de bits par symbole modulé ;

le calcul d'un treillis secondaire respectif pour chaque point de constellation voisin qui diffère d'un bit du point de constellation de décision binaire (110) ;

le calcul d'un paramètre LLR pour chaque bit respectif du symbole modulé reçu en calculant, en utilisant chaque treillis secondaire respectif, la différence entre la mesure de meilleure voie du symbole modulé reçu et le treillis secondaire respectif du bit respectif (114) ; et

la délivrance du paramètre LLR calculé à un décodeur par correction d'erreur sans voie de retour, FEC, pour décoder le symbole modulé reçu (116).

**12.** Support pouvant être lu par ordinateur (224, 228) comprenant un programme informatique qui comprend des instructions qui, lorsqu'elles sont exécutées par un processeur d'un ordinateur, amènent l'ordinateur à exécuter le procédé précédent.

Receive modulated symbols
102

Identify best path using main trellis of
received modulated symbol
104

Perform traceback of main trellis
according to the best path to identify a
hard decision constellation point
106

Select neighboring constellation points of
the identified hard decision constellation
point
108

Iterate
for each
received
modulated
symbol
118

Compute secondary trellises for each
selected neighboring constellation point
110

Reduce number of states of main and/or
secondary trellis
112

Compute LLR for each bit of the
modulated symbol
114

Provide LLR to FEC decoder
116

**Fig. 1**

200 →

Computing device (e.g., user equipment) 202

Processor(s) 218

Memory 222

Data storage 226

User interface 234

Transceiver (e.g., acting as transmitter, e.g., antenna(s)) 210

Channel (e.g., wireless medium) 206

Transceiver (e.g., acting as receiver, e.g., antenna(s)) 212

User interface 236

Computing device (e.g., access point) 204

Processor(s) 220

Memory 224

Data storage 228

Network 214

Network interface 216

FEC Decoder 208

Decoder Code 232

Encoder 230

Equalier 238

EP 3 545 657 B1

**Fig. 2**

Fig. 3

Fig. 4

Fig. 5

8QAM

602
604
604

16QAM

602
604
604

602 ○ Likeliest symbol after primary trellis trace back

604 ● Candidate symbols for secondary trellises

Fig. 6

Fig. 7

EP 3 545 657 B1

304

Main trellis

304

Best path metrics
for main trellis

300

708

Suubtract path
metrics to
calculate MSB
LLR

Side trellis for the LSB bit

710

750

Best path metrics
for MSB side trellis

**Fig. 8**

**Fig. 9**

Fig. 10

EP 3 545 657 B1

Fig. 11

| Element | Number of elements per input symbol | |
|---|---|---|
| | BCJR | Proposed solution |
| Main trellises | 2 | 1 |
| Side trellises | 0 | 6 |
| States per main trellis stage | 64 | 8 |
| States per side trellis stage | 0 | 1 |
| Branch and path metrics calculations | 1024 | 70 |
| Compare-select operations | 896 | 62 |

1200

Fig. 12

EP 3 545 657 B1

Fig. 13

EP 3 545 657 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7042938 B

**Non-patent literature cited in the description**

- A weighted-output variant of the viterbi algorithm for concatenated schemes using a convolutional inner code Une Variante À Sortie Pondérée De L'Aigorithme De Viterbi Pour Des Schemas Concaténés À Code Interieur Convolutif. **REMI SFEZ et al.** EUROCODE '90. SPRINGER, 05 November 1990, 259-270

- **SESHADRI N et al.** On post-decision symbol-reliability generation. *PROCEEDINGS OF THE INTERNATIONAL CONFERENCE ON COMMUNICATIONSCONFERENCE ON COMMUNICATIONS (ICC)], NEW YORK, IEEE, US,* 23 May 1993, vol. 2, 741-745
- **QURESHI S U H et al.** REDUCED-STATE SEQUENCE ESTIMATION WITH SET PARTITIONING AND DECISION FEEDBACK. *IEEE TRANSACTIONS ON COMMUNICATIONS, IEEE SERVICE CENTER, PISCATAWAY, NJ. USA,* 01 January 1988, vol. 36 (1), 13-20